# EUROPEAN PATENT SPECIFICATION

(11) **EP 1 354 470 B1**
(45) Date of publication and mention of the grant of the patent: **06.05.2009**
(21) Application number: 01988327.1
(22) Date of filing: 18.12.2001
(51) Int. Cl.: H04N 1/00, G09G 3/20

(54) **REDUCTION OF CONTOURING IN LIQUID CRYSTAL ON SILICON DISPLAYS BY DITHERING**
VERRINGERUNG DER KONTURIERUNG IN FLÜSSIGKRISTALL-AUF-SILIZIUM-ANZEIGEN DURCH DITHERN
REDUCTION DE LA DISTORSION DE CONTOURS DANS LE CRISTAL LIQUIDE D'AFFICHAGES AU SILICIUM AU MOYEN D'UNE JUXTAPOSITION

(30) Priority: 20.12.2000 US 256805 P; 26.09.2001 US 964125
(43) Date of publication of application: 22.10.2003
(73) Proprietor: Thomson Licensing, 92100 Boulogne-Billancourt (FR)
(72) Inventor: WILLIS, Donald, Henry, Indianapolis, IN 46250 (US)
(74) Representative: Hays, Bertrand
(86) International application number: PCT/US2001/048787
(87) International publication number: WO 2002/051122

(56) References cited:
- EP-A- 1 049 068
- EP-A- 1 137 266
- WO-A-00/70598
- US-A- 5 553 200
- US-A- 5 712 657
- US-A- 6 040 876

## Description

### BACKGROUND OF THE INVENTION

### Technical Field

This invention relates to the field of projection television receivers utilizing liquid crystal on silicon (LCOS) technology in the light projection system, and more particularly, to a contour reduction method and system suited for an LCOS high definition television (HDTV) receiver.

### Description of the Related Art

A light engine utilizing liquid crystal on silicon (LCOS) technology has a severe non-linearity in the display transfer function. This non-linearity can be corrected with a digital lookup table, referred to as a gamma table. The gamma table, however, has limited resolution, resulting in consecutive input values producing the same output values (repeated states) in low gradient portions of the table. Some of the repeated states are repeated three times, producing noticeable, undesirable contouring in the pictures made by the display.

LCOS technology is a recent development. In consequence, there is little prior art in the field. Generally, the brute-force solution has been employed to correct the non-linearity. Specifically, the brute-force solution has been to use a gamma table with enough resolution to accommodate the non-linearity. In some cases, for example, 10-bit values stored in the gamma table would have to be increased by two bits, from 10 bits up to 12 bits. The resolution of the table, however, is often under the control of the imager supplier. In consequence, the resolution of the table is not easily of quickly changed. There is a clear need for a method and/or apparatus to increase the resolution, or at least the apparent resolution, of such gamma tables without time consuming and costly design efforts.

WO 00/70598 discloses a LCOS display receiving a frame-doubled signal comprising a positive picture and a negative picture and performing gamma correction on said pictures by using Look-up tables.

US 6 040 876 discloses a method of reducing visual artifacts in a image display. The method is implemented by dithering one or more signal components in an image signal. The dithering reduces the image contouring, which is caused by quantization errors that will occur when the image is displayed.

The invention disclosed herein provides a method and system for improving the image quality attainable in a display utilizing liquid crystal on silicon (LCOS) technology as defined in the appending claims. In accordance with the inventive arrangements, the strong non-linearity of the LCOS imaging transfer function can be corrected using a digital gamma table. Further, the contouring which is often produced from the use of a gamma table can be corrected using one or more dithers.

### Brief Description of the Drawings

There are shown in the drawings embodiments which are presently preferred, it being understood, however, that the invention is not so limited to the precise arrangements and instrumentalities shown.

Figures 1 A and 1 B, taken together, represent excerpts from exemplary gamma tables.

Figure 2 is a block diagram illustrating an exemplary multiple-dither system in accordance with the present invention.

Figure 3 is a flow chart illustrating an exemplary method of reducing contouring in accordance with the present invention.

### Detailed Description of the Preferred Embodiments

The invention disclosed herein provides a method and system for improving the image quality attainable in a display utilizing liquid crystal on silicon (LCOS) technology. In accordance with the inventive arrangements, the strong non-linearity of the LCOS imaging transfer function still can be corrected by using a digital gamma table. The response of the table, however, can be improved significantly by multiple dithering. The first dithering can change one or more primary color gamma values, for example, by a first dither. The primary color gamma values can be changed for a positive picture or a negative picture, wherein primary color as used herein can be the spectral primary colors of blue, green, and red. This first dither can provide some picture improvement with respect to contouring. Further substantial reductions in contouring can be achieved by a second dither applied to the signal at the input of the gamma table.

In an LCOS display, typically, the imager is driven with a frame-doubled signal by sending first a normal frame (positive picture) and then an inverted frame (negative picture) in response to a given input picture. The generation of positive and negative pictures ensures that each pixel will be written with a positive electric field followed by a negative electric field. The resulting drive field has a zero DC component, which is necessary to avoid image sticking, and ultimately, a permanent degradation of the imager. Insofar as contouring is perceived as a visible defect or artifact in the picture, it has been determined that the human eye responds to the average value of the brightness of the pixels produced by these positive and negative pictures.

The brightness versus the drive field of an LCOS imager produces a very nonlinear function which requires a compensating nonlinear drive signal. A digital lookup table called a gamma table can produce this nonlinear drive signal, even though the gamma table does not necessarily fit a gamma exponential curve. In one version of an imager drive system, a gamma table containing a positive picture portion and a negative picture portion is used. This is the type of gamma table described herein.

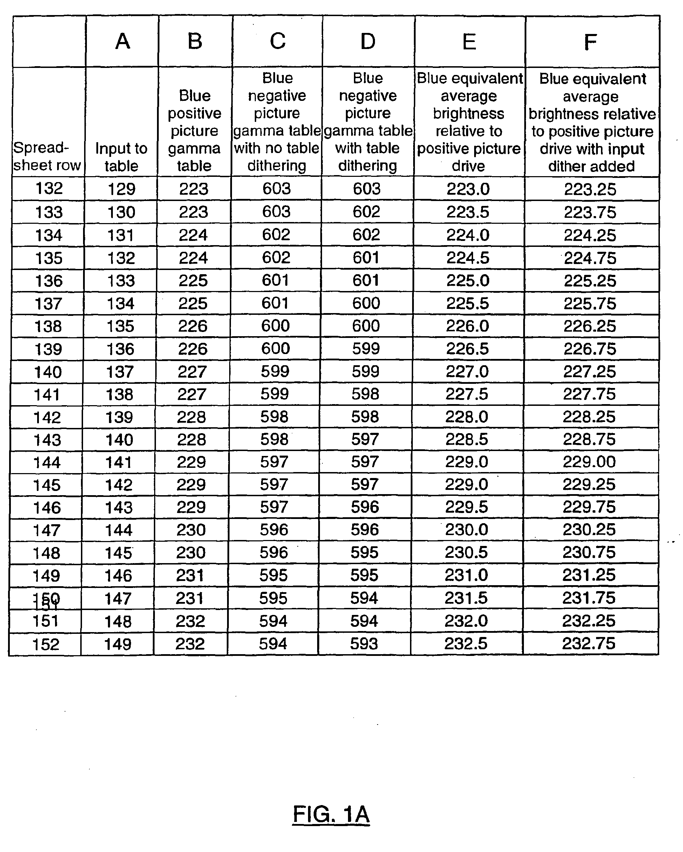

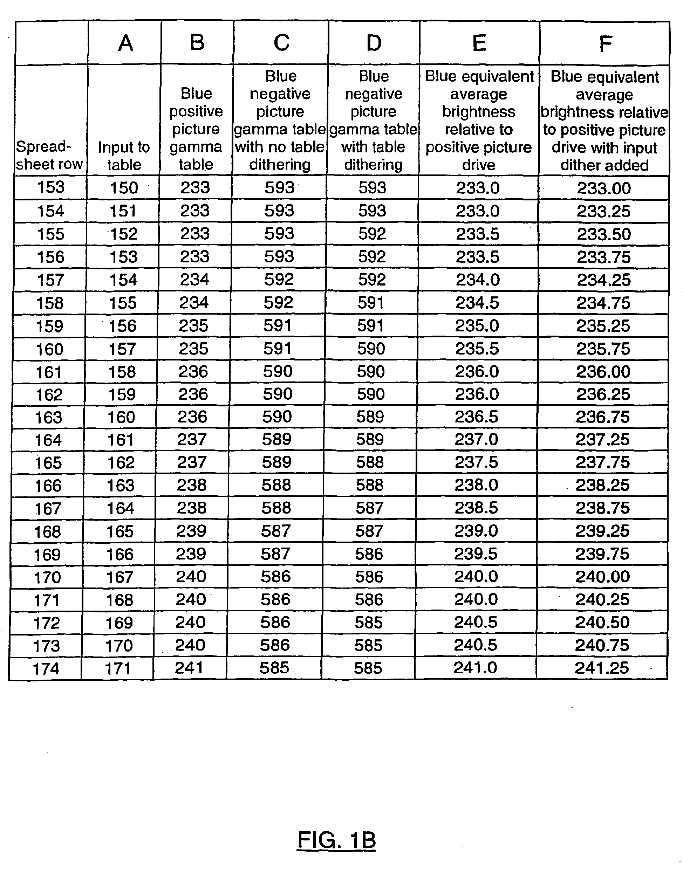

Figures 1 A and 1 B have been excerpted from a spreadsheet wherein the column headings A through F correspond to column headings of the spreadsheet and the first column having values 132 through 174 corresponds to the row numbers of the spreadsheet. Taken together, Figures 1 A and 1B are a collection of columns representing in part different blue gamma tables for reducing contouring by generating a 10-bit output signal responsive to an 8-bit input signal. Gamma tables having a similar function can be used for red and green colors as well. As shown in Figures 1 A and 1B, inputs values 129 through 171 are shown, whereas the entire table covers input values of 0 through 255.

In order to understand the table values of Figures 1 A and 1 B, an explanation of the specific LCOS system to which it refers is necessary. The drive voltages are supplied from plate electrodes on each side of the LCOS array. LCOS can be thought of as one large liquid crystal formed on a silicon die. The silicon die is divided into an incremental array of tiny plates. A tiny incremental region of the liquid crystal is influenced by the electric field generated by each tiny plate and the common plate. Each such tiny plate and corresponding liquid crystal region, taken together, can be referred to as a cell of the imager. Each cell corresponds to an individually controllable pixel. A common plate electrode is disposed on the other side of the liquid crystal. In the presently preferred LCOS system to which the gamma table pertains, the common plate is always at a potential of 8 volts. Each of the other plates in the array of tiny plates is operated in two voltage ranges. For positive pictures, the voltage can vary between 0 volts and 8 volts. For negative pictures, the voltage can vary between 8 volts and 16 volts.

Notably, the light supplied to the imager, and therefore supplied to each cell of the imager, is field polarized. Each liquid crystal cell can rotate the polarization of the input light responsive to the RMS value of the electric field applied to the cell by the plate electrodes. Interestingly, the cells are not responsive to the polarity, whether positive or negative, of the applied electric field. The brightness of each pixel's cell is a function of the rotation of the polarization of the light incident on the cell.

In this embodiment, in the case of either positive or negative pictures, as the field driving the cells approaches a zero field, corresponding to 8 volts, the closer each cell comes to white, which is full on. The input values can be supplied to the gamma table by an analog-to-digital (A/D) converter and can vary over many incremental steps. Other systems are possible, for example, where the common voltage is 0 volts. It will be appreciated that the inventive arrangements taught herein are applicable to all such positive and negative field LCOS imager driving systems. In any event, positive pictures can be defined as positive pictures when the voltage applied to the common plate electrode is greater than or equal to the greatest value in the range of the variable plate voltages in the array of the other electrode. Conversely, negative pictures can be defined as negative pictures when the voltage applied to the common plate electrode is less than or equal to the smallest value in the range of the variable plate voltages in the array of the other electrode.

As shown in Figures 1 A and 1B, the exemplary gamma table can include six columns representing data and functionality as described herein. In fact, there are several alternative tables represented. The portion of the gamma table shown is from the lowest gradient portion of a blue table, where the contouring problem usually is most severe. In most cases, green contouring is worse than blue or red contouring. As previously mentioned, the first column, having values 132 through 174, corresponds to the row numbers of the spreadsheet from which the exemplary gamma table was excerpted. Column A includes inputs to the gamma table. Columns B and C represent prior art gamma correction values. In each of columns B and C, the brightness increases going down each column. Column D represents gamma correction values resulting from a single dither applied to the values of column C. This single dither can be referred to as a table dither. Column E represents equivalent average brightness that would be produced by a positive only gamma table if the positive and negative tables are implemented as in columns B and D respectively. Column F represents equivalent average brightness values similar to column E, with the noted exception that a second dither has been applied to the input signal. This second dither can be referred to as an input dither, to distinguish it from the table dither. Taken together, the table dither and the input dither are a multiple dither.

When a positive picture is being generated, the output values can come from column B. When a negative picture is being generated, the output values can come from the negative table, two possible versions of which are shown in columns C and D. The gamma table is created such that a negative table value will produce approximately the same light intensity as a positive table value. The portion of the gamma table shown in Figures 1 A and 1 B is from the lowest gradient portion of a blue table where the contouring problem usually is most severe. The conventional practice of the prior art would use column B for positive pictures and column C for negative pictures. As can be seen from the Figures 1A and 1B, there are several places in the table in which successive input values produce the same pair of positive and negative output values. For example, input values 150, 151, 152, and 153 (corresponding to spreadsheet row numbers 153-156 respectively) produce a positive picture output value of 233 in column B and a negative picture output value of 593 in column C. Repeated values such as this usually produce visible contouring in a resulting picture. The alternative negative picture gamma table shown in column D is based upon a dither of the values in column C. It can be seen that fewer values are repeated in column D than for column C. For example, prior to application of the first dither, the input values of 150, 151, 152, and 153 resulted in a repeated gamma value of 593 as shown in column C. After application of the first dither, however, only the input values of 149, 150, and 151 resulted in a repeated gamma value of 593 as shown in column D. Thus, the repetition was decreased by one.

As an example of a presently preferred table dither, the following equation executed within a spreadsheet, such as Microsoft Excel, manufactured by Microsoft Corporation of Redmond, Washington, was used to calculate the column D gamma correction value for the input value of 152:
=IF(AND(B154=B155,B153=B155),C155-1,
   IF(AND(B155 = B154,B155 = B156,B155 < > B153),C155,
   IF(B155=B154,C155-1,C155))).

The above expression refers to cells of the spreadsheet. As such, the expression references cell locations using the column headings A through F in combination with the cell row numbers of the spreadsheet derived from the first column of Figures 1A and 1B. The above equation can be used to apply a dither to a gamma table with preferably less than 5 repeated picture values.

The perceived brightness of a scene region is determined by the average of the positive picture brightness and the negative picture brightness. Column E shows the average effect of the positive picture and the negative picture for that input value, relative to the positive table value when using the values of column B and column D. Notably, the input values 150 through 153 produce two different average brightness levels, as shown in column E, resulting in a reduction of contouring. It can be seen in column E, however, that not all of the repetitions of brightness levels for consecutive inputs have been eliminated.

The results of the first dither, using the values of column D, can be demonstrated by the following examples. When the input signal to the gamma table is 142, without the further dither of the input signal, the result in column E is the average of the corresponding values in columns B and D, which are 229 and 597. It must be remembered that the values in the two columns are equal to one another in brightness, so that for purposes of the calculations, the 597 value is equal to the 229 value. The average of 229 and 229 is 229 as shown in column E. When the input signal to the gamma table is 143, without the further dither of the input signal, the result in column E is the average of the corresponding values in columns B and D, which are 229 and 596 respectively. For purposes of the calculations, the 596 value is equal to the 230 value. The average of 229 and 230 is 229.5 as shown in column E. As can be seen, it is necessary to modify only one of the sets of positive and negative picture values, not both. Consequently, another embodiment of the invention can include application of the table dither to the positive gamma values, rather than the negative gamma values.

In order to eliminate all, or at least virtually all, of the repeated brightness levels in accordance with the inventive arrangements, a further dither signal can be added to the input signal. For example, a one-least-significant-bit dither can be added to an 8-bit input signal. This dither can be alternately low and high, pixel by pixel. The phase of the dither also can invert each line, forming a quincunx pattern. Such a pattern can have low visibility. Inverting the quincunx pattern for each input picture can reduce the visibility of the input dither pattern in the picture. A 4-state or an 8-state dither can be used in accordance with the inventive arrangements, instead of a 2-state dither as explained above. Such higher state dithers, however, can be progressively harder to hide in the picture.

In order to examine the overall effect of both measures on contouring, that is, the effect of the multiple dither, it is necessary to average together the gamma outputs of the positive and negative pictures and the outputs of the table for the high and low values of the input dither. This averaging is shown in column F. The examples are explained below.

The effect of the input dither, a 2-state dither in the presently preferred embodiment, is to have the input signal vacillate between two adjacent table input signals with a 50% duty cycle. This results in an average brightness of four table output values rather than just two table output values, as demonstrated by the following examples. Assume the input value is 142. The further dither of the input signal will result in an effective input value that is equal to 142 half of the time that 142 is applied as an input, and equal to 143 the other half of the time that 142 is applied as an input. When the effective input is 142, the gamma values are 229 and 597 (597 being equal to 229). When the effective input is 143, the gamma values are 229 and 596 (596 being equal to 230). The average of 229, 229, 229 and 230 is 229. 25 as shown in column F. Assume the input value is 143. The further dither of the input signal will result in an effective input value that is equal to 143 half of the time that 143 is applied as an input, and equal to 144 the other half of the time that 143 is applied as an input. When the effective input is 143, the gamma values are 229 and 596 (596 being equal to 230). When the effective input is 144, the gamma values are 230 and 596 (596 being equal to 230). The average of 229, 230, 230 and 230 is 229.75 as shown in column F.

It will be appreciated that the actual gamma table would need to include only columns A, B, and D to be operational. Column C would be useful only if the column C values were changeable during service, and the column D values needed to be recalculated; assuming the microprocessor in the receiver were programmed to perform this function. It is the table dithering that produces the values in column D and the input dithering that achieves the results demonstrated by column F. The values of column F will be the operational result and need not be in the table itself.

As shown in column F, for each incremental step in the input value there is a change in the equivalent average brightness when multiple dithering is employed in accordance with the inventive arrangements. The absence of repeating values in the equivalent average brightness precludes, or at least substantially precludes contouring. It should be noted that it is possible that in a particular imager system, a small number of the gamma values for the least bright input values can be constant. In that case, the equivalent average brightness may not change even with multiple dithering. Even if contouring results at these least bright levels, the entire picture typically is too dim to see with or without contouring. Thus, for all practical purposes, the inventive arrangements eliminate, or substantially reduce, visible contouring in the picture.

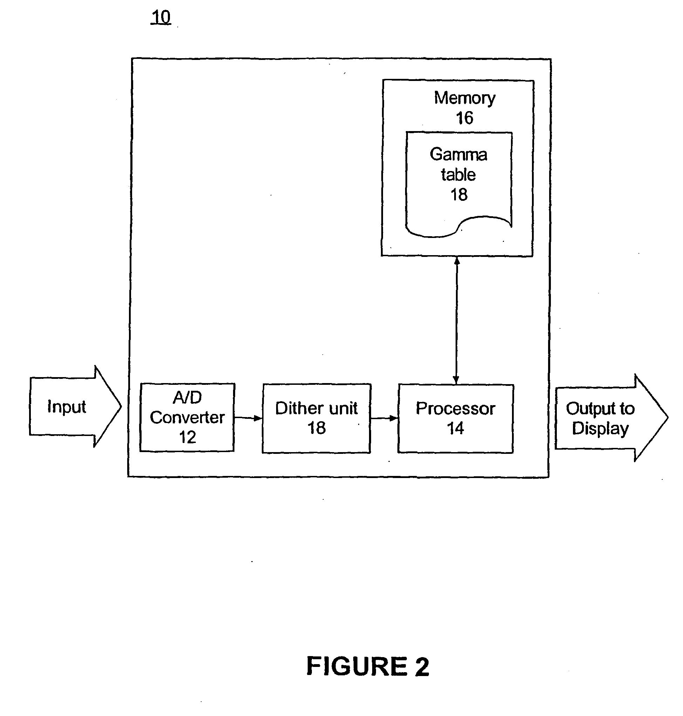

Figure 2 is a block diagram illustrating an exemplary multiple-dither system 10 in accordance with the present invention. As shown in Figure 2, the multiple-dither system 10 can include an optional A/D converter 12, a dither unit 18, a processor 14, and a memory unit 16. Each of the aforementioned components can be communicatively linked, for example through a communications bus, as is known in the art.

In one embodiment of the invention, the optional A/D converter 12 can be included to digitize a received analog signal. For example, the A/D converter 12 can process a received frame-doubled input signal including a positive picture and a negative picture. The received analog signal can be transformed into a digital signal suitably formatted for processing by the dither unit 18 and/or the processor 14. It should be appreciated, however, that the invention disclosed herein can be utilized within an entirely digital environment. In that case, a digital input can be received, in which case the A/D converter 12 need not be included.

Regardless, a digitized input signal can be provided to the dither unit 18. As shown in Figure 2, the dither unit 18 can apply a one-least-significant-bit dither to the input signal prior to providing the signal to processor 14. The dithered signal then can be provided to processor 14. Processor 14 can be any variety of processors such as a specialized digital signal processor or a more general microprocessor, each of which is known in the art. The processor 14 can apply a table dither to the received signal. More specifically, the processor 14 can access memory 16, which can be a volatile or non-volatile memory having instructions, algorithms, and/or a gamma table 18 stored therein. With reference to memory 16, processor 14 can apply a table dither to the received signal. This table dither can selectively modify a primary color gamma value of the positive or negative picture. The resulting signal, having been subjected to multiple dithers, can be provided to an LCOS display.

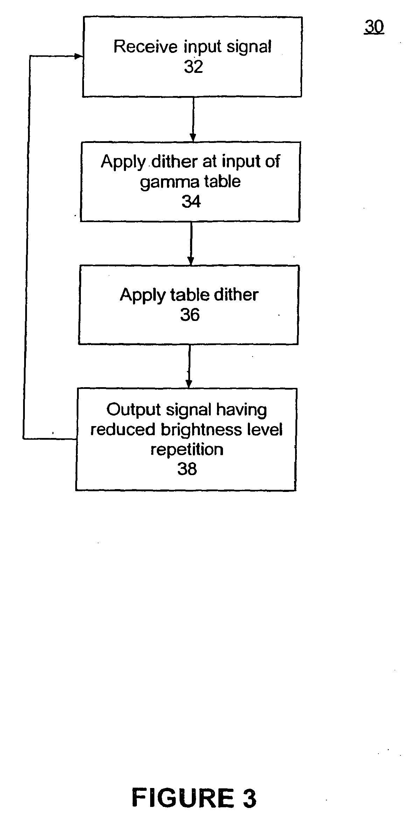

Figure 3 is a flow chart illustrating an exemplary method 30 of reducing contouring in accordance with the present invention. The method can begin in step 32 where an input signal can be received. As previously mentioned, the input signal can be a digital representation of a frame-doubled signal having a positive and a negative picture.

In step 34, a dither can be applied to the received input signal at the input of the gamma table. For example, a one-least-significant-bit dither signal can be applied to the input signal. After completion of step 34, the method can continue to step 36. In step 36, a table dither can be applied to the input signal. For example, the table dither can be implemented using digital signal processing algorithms known in the art which can implement the table dither as described herein. Alternatively, as mentioned, the table dither can be implemented using a look-up table such as the gamma table disclosed herein. In any case, in step 36, as a result of the application of the table dither, a gamma value of the input signal can be modified. Notably, this can produce a reduction of contouring in the resulting output. After step 36, the method can continue to step 38.

In step 38, an output signal can be provided having reduced brightness level repetition. The output signal can be provided, for example, to an LCOS display. After completion of step 38, the method can be repeated as necessary to process further received signals. From step 38, the method can loop back to step 32 to process subsequently received input signals.

The invention disclosed herein can be embodied in other specific forms without departing from the essential attributes thereof, and accordingly, reference should be had to the following claims, rather than to the foregoing specification, as indicating the scope of the invention.

## Claims

1. A method of reducing contouring in a liquid crystal on silicon (LCOS) display comprising controllable pixels, the display including at least one gamma correction table comprising rows, the method comprising the steps of:
receiving an input signal comprising a succession of frames, wherein, when the voltage the voltage between a common electrode and the pixels electrodes, is greater than or equal to a given common voltage, said frame is called positive frame and when the voltage between a common eletrode and the pixel electrodes is less than or equal to a given common voltage, said frame is called negative frame, wherein the instantaneous value of said input signal is associated with one of said rows called current row;
applying a first set of gamma correction values to said controllable pixels occurring during said positive frame;
applying a second set of gamma correction values to said controllable pixels occurring during said negative frame;
successively displaying said gamma corrected pixels of said positive frame and said gamma corrected pixels of said negative frame
**characterized by** applying a first alteration
- for negative frames wherein using the gamma correction table,
• the current negative frame gamma corrected value of said current now (155) is decremented by one digit, if the positive frame gamma corrected value of said current row (155) and the positive frame gamma corrected value of the two preceding rows (154, 153) are equal,
• the current negative frame gamma corrected value of said current row is unchanged, if the positive frame gamma corrected value of the next successive row equals the positive frame gamma corrected value of the current and preceding rows and the positive frame gamma corrected value of the twice previous row is different from the positive frame gamma corrected value of the current row, and
• the current negative frame gamma corrected value of said current row is decremented by one digit, if the positive frame gamma corrected value of the current row is equal to the positive frame gamma corrected value of the previous row;
- or a first alteration for positive frames; wherein,
• the current positive frame gamma corrected value of said current row is incremented by one digit, if the negative frame gamma corrected value of said current row and the negative frame gamma corrected value of the two preceding rows are equal;,
• the current positive frame gamma corrected value of said current row is unchanged, if the negative frame gamma corrected value of the next succesive row equals the negative frame gamma corrected value of the current and preceding rows and the negative frame gamma corrected value of the twice previous row is different from the negative frame gamma corrected value of the current row and,
• the current positive frame gamma corrected value of said current row is incremented by one digit, if the negative frame corrected value of the current row is equal to the negative frame gamma corrected value of the previous row,
and a second alteration wherein
said input signal is varied by applying a one least significant bit dither.

2. The method of claim 1, wherein the varying step results in a picture having a quincunx pattern.

3. The method of claim 2 wherein said quincunx pattern in said picture is alternately inverted and not inverted.

4. The method of claim 1 wherein said at least one gamma correction table is a primary color gamma correction table.

5. The method of claim 4 wherein said primary color is selected from the group comprising reds green and blue.

6. The method of claim 1 wherein said input signal is an 8-bit signal and said gamma correction table has a resolution of 10 bits.

7. The method of claim 5 wherein said gamma correction unit comprises a primary color gamma correction table, said primary color selected from the group comprising red, green and blue.

8. A system for reducing contouring caused by repeated displayed pixel brightness levels in a liquid crystal on silicon (LCOS) display, comprising:
A receiver for receiving an input signal comprising a succession of frames, wherein, when the voltage between a common electrode and the pixels electrodes is greater than or equal to a given common voltage, said frame is called positive frame and where the voltage between a common electrode and the pixel electrodes is less than or equal to a given common voltage, said frame is called negative frame,
a display for displaying each of said successive positive and negative frames with a displayed pixel brightness level for each pixel;
a system for transferring each of said pictures from said receiver to said display;
said system including a gamma correction unit to cause said display to operate in accordance with gamma correction transfer functions;
**characterized in that** paid system further comprises a unit applying at least a first alteration and a second alteration according to the method of claims 1 to 7.

## Patentansprüche

1. Verfahren zur Verringerung der Konturierung in einer Flüssigkristall-auf-Silizium- bzw. LCOS-Anzeige mit steuerbaren Pixeln, wobei die Anzeige mindestens eine Gammakorrekturtabelle mit Zeilen enthält, wobei das Verfahren die folgenden Schritte umfasst:
Empfangen eines Eingangssignals, das eine Abfolge von Vollbildern umfasst, wobei das Vollbild als Positiv-Vollbild bezeichnet wird, wenn die Spannung zwischen einer gemeinsamen Elektrode und den Pixelelektroden größer oder gleich einer gegebenen gemeinsamen Spannung ist, und das Vollbild als Negativ-Vollbild bezeichnet wird, wenn die Spannung zwischen einer gemeinsamen Elektrode und den Pixelelektroden kleiner oder gleich einer gegebenen gemeinsamen Spannung ist; wobei der Momentanwert des Eingangssignals mit einer der Zeilen assoziiert wird, die als aktuelle Zeile bezeichnet wird,
Anwenden einer ersten Menge von Gammakorrekturwerten auf die steuerbaren Pixel, die während des Positiv-Vollbilds auftreten;
Anwenden einer zweiten Menge von Gammakorrekturwerten auf die steuerbaren Pixel, die während des Negativ-Vollbilds auftreten;
sukzessives Anzeigen der gammakorrigierten Pixel des Positiv-Vollbilds und der gammakorrigierten Pixel des Negativ-Vollbilds,
**gekennzeichnet durch** Anwenden einer ersten Abänderung für Negativ-Vollbilder, wobei unter Verwendung der Gammakorrekturtabelle
• der gammakorrigierte Wert des aktuellen Negativ-Vollbilds der aktuellen Zeile (155) um eine Stelle dekrementiert wird, wenn der gammakorrigierte Wert des Positiv-Vollbilds der aktuellen Zeile (155) und der gammakorrigierte Wert des Positiv-Vollbilds der zwei vorausgehenden Zeilen (154, 153) gleich sind,
• der gammakorrigierte Wert des aktuellen Negativ-Vollbilds der aktuellen Zeile unverändert bleibt, wenn der gammakorrigierte Wert des Positiv-Vollbilds der nächsten sukzessiven Zeile gleich dem gammakorrigierten Wert des Positiv-Vollbilds der aktuellen und vorherigen Zeile ist und der gammakorrigierte Wert des Positiv-Vollbilds der zweimal vorherigen Zeile von dem gammakorrigierten Wert des Positiv-Vollbilds der aktuellen Zeile verschieden ist, und
• der gammakorrigierte Wert des aktuellen Negativ-Vollbilds der aktuellen Zeile um eine Stelle dekrementiert wird, wenn der gammakorrigierte Wert des Positiv-Vollbilds der aktuellen Zeile gleich dem gammakorrigierten Wert des Positiv-Vollbilds der vorherigen Zeile ist; oder einer ersten Abänderung für Positiv-Vollbilder;
wobei
• der gammakorrigierte Wert des aktuellen Positiv-Vollbilds der aktuellen Zeile um eine Stelle inkrementiert wird, wenn der gammakorrigierte Wert des Negativ-Vollbilds der aktuellen Zeile und der gammakorrigierte Wert des Negativ-Vollbilds der beiden vorausgehenden Zeilen gleich sind;
• der gammakorrigierte Wert des aktuellen Positiv-Vollbilds der aktuellen Zeile unverändert bleibt, wenn der gammakorrigierte Wert des Negativ-Vollbilds der nächsten sukzessiven Zeile gleich dem gammakorrigierten Wert des Negativ-Vollbilds der aktuellen und vorherigen Zeile ist und der gammakorrigierte Wert des Negativ-Vollbilds der zweimal vorherigen Zeile von dem gammakorrigierten Wert des Negativ-Vollbilds der aktuellen Zeile verschieden ist, und
• der gammakorrigierte Wert des aktuellen Positiv-Vollbilds der aktuellen Zeile um eine Stelle inkrementiert wird, wenn der korrigierte Wert des Negativ-Vollbilds der aktuellen Zeile gleich dem gammakorrigierten Wert des Negativ-Vollbilds der vorherigen Zeile ist,
und einer zweiten Abänderung, wobei
das Eingangssignal **durch** Anwenden eines einniedrigstwertigen Bit-Dither variiert wird.

2. Verfahren nach Anspruch 1, wobei der Schritt des Variierens zu einem Bild führt, das ein Quincunx-Muster aufweist.

3. Verfahren nach Anspruch 2, wobei das Quincunx-Muster in dem Bild abwechselnd invertiert und nicht invertiert wird.

4. Verfahren nach Anspruch 1, wobei die mindestens eine Gammakorrekturtabelle eine Primärfarben-Gammakorrekturtabelle ist.

5. Verfahren nach Anspruch 4, wobei die Primärfarbe aus der Gruppe umfassend rot, grün und blau ausgewählt wird.

6. Verfahren nach Anspruch 1, wobei das Eingangssignal ein 8-Bit-Signal ist und die Gammakorrekturtabelle eine Auflösung von 10 Bit aufweist.

7. Verfahren nach Anspruch 5, wobei die Gammakorrektureinheit eine Primärfarben-Gammakorrekturtabelle umfasst, wobei die Primärfarbe aus der Gruppe umfassend rot, grün und blau ausgewählt wird.

8. System zur Verringerung der durch wiederholt angezeigte Pixelhelligkeitspegel verursachten Konturierung in einer Flüssigkristall-auf-Silizium- bzw. LCOS-Anzeige, umfassend:
einen Empfänger zum Empfangen eines Eingangssignals, das eine Abfolge von Vollbildern umfasst, wobei das Vollbild als Positiv-Vollbild bezeichnet wird, wenn die Spannung zwischen einer gemeinsamen Elektrode und den Pixelelektroden größer oder gleich einer gegebenen gemeinsamen Spannung ist, und das Vollbild als Negativ-Vollbild bezeichnet wird, wenn die Spannung zwischen einer gemeinsamen Elektrode und den Pixelelektroden kleiner oder gleich einer gegebenen gemeinsamen Spannung ist;
eine Anzeige zum Anzeigen jedes der sukzessiven Positiv- und Negativ-Vollbilder mit einem angezeigten Pixelhelligkeitspegel für jedes Pixel;
ein System zum Transferieren jedes der Bilder von dem Empfänger zu der Anzeige;
wobei das System eine Gammakorrektureinheit enthält, um zu bewirken, dass die Anzeige gemäß Gammakorrektur-Übertragungsfunktionen arbeitet;
**dadurch gekennzeichnet, dass** das System ferner eine Einheit umfasst, die mindestens eine erste Abänderung und eine zweite Abänderung gemäß dem Verfahren nach Anspruch 1 bis 7 anwendet.

## Revendications

1. Procédé de réduction des effets de contour dans un dispositif de visualisation à cristaux liquides sur silicium (LCOS - Liquid Crystal On Silicone) comportant des pixels que l'on peut commander, le dispositif de visualisation comprenant au moins une table de correction gamma comportant des rangées, le procédé comportant les étapes suivantes :
réception d'un signal d'entrée comportant une succession de trames dans lesquelles, quand la tension entre une électrode commune et les électrodes des pixels est supérieure ou égale à une tension commune donnée, ladite trame est appelée trame positive et quand la tension entre une électrode commune et les électrodes des pixels est inférieure ou égale à une tension commune donnée, ladite trame est appelée trame négative, dans laquelle la valeur instantanée dudit signal d'entrée est associée à une desdites rangées rangée concernée ;
application d'un premier ensemble de valeurs de correction gamma auxdits pixels que l'on peut commander présents dans la dite trame positive ;
application d'un deuxième ensemble de valeurs de correction gamma auxdits pixels que l'on peut commander présents dans ladite trame négative ;
visualisation successive desdits pixels de ladite trame positive qui ont été soumis à la correction gamma et desdits pixels de ladite trame négative qui ont été soumis à la correction gamma ;
**caractérisé par** l'application d'une première modification
- pour les trames négatives dans laquelle, en utilisant la table de correction gamma,
■ la valeur résultant de la correction gamma de la trame négative concernée de ladite rangée concernée (155) est diminuée d'une unité, si la valeur résultant de la correction gamma de la trame positive de la dite rangée concernée (155) et les valeurs résultant de la correction gamma de la trame positive des deux rangées précédentes (154, 153) sont égales,
■ la valeur résultant de la correction gamma de la trame négative concernée de ladite rangée concernée reste inchangée, si la valeur résultant de la correction gamma de la trame positive de la rangée immédiatement suivante est égale à la valeur résultant de la correction gamma de la trame positive de ladite rangée concernée et des rangées précédentes et si la valeur résultant de la correction gamma de la trame positive de la rangée deux fois précédente est différente de la valeur résultant de la correction gamma de la trame négative de ladite rangée concernée, et
■ la valeur résultant de la correction gamma de la trame négative concernée de ladite rangée concernée est diminuée d'une unité, si la valeur résultant de la correction gamma de la trame positive de la rangée concernée est égale à la valeur résultant de la correction gamma de la trame positive concernée de la rangée précédente ;
- ou une première modification pour les trames positives, dans laquelle,
■ la valeur résultant de la correction gamma de la trame positive concernée de ladite rangée concernée est augmentée d'une unité, si la valeur résultant de la correction gamma de la trame négative de la dite rangée concernée et les valeurs résultant de la correction gamma de la trame négative des deux rangées précédentes sont égales,
■ la valeur résultant de la correction gamma de la trame positive concernée de ladite rangée concernée reste inchangée, si la valeur résultant de la correction gamma de la trame négative de la rangée immédiatement suivante est égale à la valeur résultant de la correction gamma de la trame négative de ladite rangée concernée et des rangées précédentes et si la valeur résultant de la correction gamma de la trame négative de la rangée deux fois précédente est différente de la valeur résultant de la correction gamma de la trame négative de ladite rangée concernée, et
■ la valeur résultant de la correction gamma de la trame positive concernée de ladite rangée concernée de ladite rangée concernée est augmentée d'une unité, si la valeur résultant de la correction gamma de la trame négative de ladite rangée concernée est égale à la valeur résultant de la correction gamma de la trame négative de la rangée précédente ;
et une deuxième modification, dans laquelle
on fait varier ledit signal d'entrée en appliquant une activation à l'aide d'un bit de poids le plus faible.

2. Procédé selon la revendication 1, dans lequel l'étape de variation a pour résultat une image à configuration en quinconces.

3. Procédé selon la revendication 2, dans lequel ladite configuration en quinconces de ladite image est alternativement inversée et non inversée.

4. Procédé selon la revendication 1, dans lequel ladite au moins une table de correction gamma est une table de correction gamma d'une couleur primaire.

5. Procédé selon la revendication 4, dans lequel ladite couleur primaire est sélectionnée dans le groupe constitué des couleurs rouge,verte et bleue.

6. Procédé selon la revendication 1, dans lequel ledit signal d'entrée est un signal de 8 bits et ladite table de correction gamma a une définition de 10 bits.

7. Procédé selon la revendication 5, dans lequel ladite unité de correction gamma comprend une table de correction gamma d'une couleur primaire, ladite couleur primaire étant sélectionnée dans le groupe constitué des couleurs rouge,verte et bleue.

8. Système de réduction des effets de contour dus à des niveaux répétés de brillance de pixels visualisés dans un dispositif de visualisation à cristaux liquides sur silicium (LCOS - Liquid Crystal On Silicone), comportant :
un récepteur destiné à recevoir un signal d'entrée comportant une succession de trames dans lequel, quand la tension entre une électrode commune et les électrodes des pixels est supérieure ou égale à une tension commune donnée, ladite trame est appelée trame positive et quand la tension entre une électrode commune et les électrodes des pixels est inférieure ou égale à une tension commune donnée, ladite trame est appelée trame négative,
un dispositif de visualisation permettant de visualiser chacune desdites trames positives et négatives successives avec un niveau de brillance de pixel visualisé propre à chaque pixel ;
un système de transfert de chacune desdites images dudit récepteur audit dispositif de visualisation ;
ledit système comprenant une unité de correction gamma pour faire fonctionner ledit dispositif de visualisation conformément aux fonctions de transfert de correction gamma ;
**caractérisé en ce que** ledit système comporte en outre une unité qui applique au moins une première et une deuxième modifications conformes au procédé défini dans les revendications 1 à 7.
